# EUROPEAN PATENT APPLICATION

(11) **EP 2 437 477 A1**
(43) Date of publication of application: **04.04.2012**
(21) Application number: 10251705.9
(22) Date of filing: 30.09.2010
(51) Int. Cl.: H04M 3/22, G10L 15/26

(54) **Fraud detection**

(71) Applicant: British Telecommunications public limited company, London EC1A 7AJ (GB)
(72) Inventor: The designation of the inventor has not yet been filed
(74) Representative: Nash, Roger William

(57) **Abstract**

Fraudulent callers that masquerade as legitimate callers in order to discover details of bank accounts or other accounts are an increasing problem. In order to identify and prevent possible fraudsters from obtaining such details a method and system is proposed that transform the speech of a batch of incoming calls to strings of phonemes or text, whereafter similar caller patterns, such as similar phrases or wording, in the calls are determined and the calls having the similar caller patterns, and preferably also similar acoustic properties, are grouped together and identified as being from the same fraudulent caller. Transactions initiated by the fraudulent caller can as a result be stopped and preferably a voiceprint of the fraudulent caller's speech is generated and stored in a database for further use.

## Description

### Field of the invention

The invention relates to fraud detection and especially to a method and system for identifying a caller who has initiated many calls to, for example, a contact centre masquerading as a different person each time.

### Background of the invention

Fraudulent callers pose a problem for contact centres and businesses. In order to obtain access to other people's accounts, or obtain other business details, fraudulent callers' call a contact centre or business pretending to be the legitimate account holder or customer.

One way of identifying fraudulent callers is to use speaker recognition. The voice of the caller is for example compared to a stored voiceprint of the legitimate account holder or compared to a set of stored voiceprints of already known fraudulent callers. In both cases it is necessary to acquire and store voiceprints for different users otherwise the system will be of no help; unless a voiceprint is stored for a legitimate user a fraudulent caller, whose voiceprint is not stored, could pose as the legitimate user and obtain account details or sensitive business information.

### Summary of the invention

According to a first aspect of the invention there is provided a method for automatically identifying suspicious calls to an organisation comprising transforming at least a caller portion of the speech of the calls in order to obtain transcript of the calls, associating a claimed identity of the caller with each call, comparing the transcripts of the calls in order to identify one or more groups of calls in which the caller uses similar characteristic wording, comparing the voice in each call in each identified group to the voices in the other calls in the group, comparing claimed caller identities of the calls in each group, and if the associated claimed caller identities are different and the voices match, identifying the calls in the group as being suspicious as they are likely to have been made by the same caller claiming different identities.

This alleviates problems caused by the large number of calls which might need to be analysed. Current speaker recognition technology will falsely identify a match in around 1% of cases. The inventor has realised that using speaker recognition alone in analysing a large number of calls will falsely identify a number of legitimate calls as fraudulent. However, the inventor has further realised that by, in a first phase, identifying candidate groups of suspicious calls based on similar characteristic wording found in transcripts of the calls, and then, in a second phase, using voice matching to check that the voice of the caller in each candidate group of suspicious calls is the same, the likelihood of falsely identifying calls as fraudulent is much reduced.

Another advantage is that fraudulent callers can be detected without having a set of voiceprints for legitimate and/or fraudulent callers stored. Instead a fraudulent caller that during a short time makes many calls to a contact centre pretending each time to be a different account holder can be identified based on his use of similar phrases or wording. A further advantage is that the search for suspicious calls is not based on predefined keywords but the fraudulent caller can be detected based on any similar phrases or expressions from a rehearsed dialogue, which increases the possibility of identifying fraudulent callers.

There is now provided, by way of example only, a description of some embodiments of the present invention. This is given with reference to the accompanying drawings, in which:
Figure 1 provides a schematic overview of a system according to a first embodiment.
Figure 2 provides a schematic overview of a fraud analysis server.
Figure 3 shows a flow chart of the grouping of calls based on the use of similar phrases.
Figure 4 shows a flow chart for a voice analysis of the calls in the group.

### Description of preferred embodiments

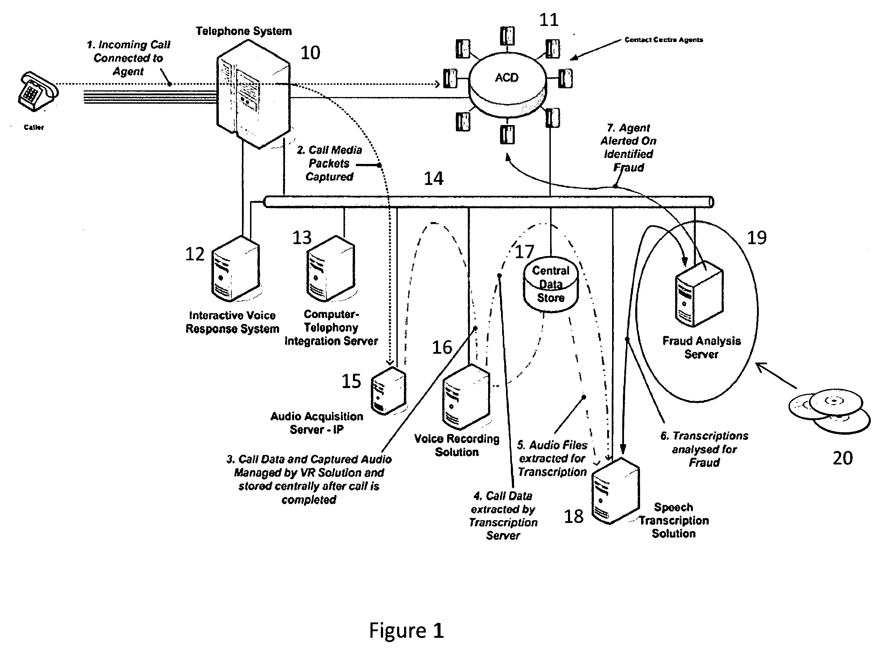

A contact centre system (figure 1) comprises a telephone system 10 for receiving incoming calls and an Automatic Call Distributor (ACD) 11 for distributing the incoming calls between the contact centre agents.

Connected to the telephone system 10 is an Interactive Voice Response System (IVRS) 12. The telephone system 10 and IVRS 12 are both further connected to a Computer - Telephony Integration Server (CTI) 13 via a Local Area Network (LAN) 14. Coupled to the LAN 14 is also an Audio Acquisition Server 15; a Voice Recording Solution 16 for recording incoming calls; a central data store 17, which is also directly connected to the ACD 11; a Speech Transcription server 18 for transcribing the recorded calls to a phoneme or text transcript; and a Fraud Analysis Server 19. The different servers, stores and solutions described here can be installed on the same computer or on different computers.

In operation the telephone system 10 receives a call from a caller. The IVRS 12 plays different options to the caller, who selects one or more of the options, whereafter the call is forwarded to the ACD for connection to a certain contact centre agent based on which option(s) the caller has selected.

During the call the caller's audio, or speech, of the call is collected by the audio acquisition server 15. The captured audio as well as call data, such as CLI (Caller Line Identity), for the call is managed by the voice recording solution 16. The audio normally includes both the spoken name of the caller as well as his account number and the voice recording solution 16 will associate the account number with the call as metadata. After the call is completed the audio and call data is stored in the central data store 17.

The stored audio and call data is used by the fraud analysis server 19 to determine calls that are made by the same person using different identities in order to fraudulently obtain for example account details belonging to other customers. Normally a fraudster withholds his CLI (telephone number) when making a call. In this embodiment the fraud analysis server is therefore arranged to only analyse those calls where the CLI is withheld. Alternatively, in other embodiments the system is configured to analyse all calls or any call where the phone number is not registered as belonging to the claimed identity, or name, of the account holder. The fraud analysis is performed on a batch of stored calls at the end of each day. In alternative embodiments, the analysis might instead be performed every hour; every second day; or maybe once a week. Preferably the analysis is made at least once a day in order to identify the possible fraudsters and to stop fraudulent transactions as soon as possible.

The solution proposed here uses the speech transcription server 18 to produce speech to text or phoneme transcriptions of all the calls where the CLI has been withheld from a daily batch of calls. The speech transcription server 18 extracts audio files from the central data store 17 at the end of each day; performs speech to transcription on the selected audio files and returns the text files to the central data store 17 for storage. The fraud analysis server then gets the transcriptions from the central data store in order to perform a first part of the analysis on these transcriptions. Alternatively, the speech transcription service 18 could pass the transcriptions directly to the fraud analysis server 19.

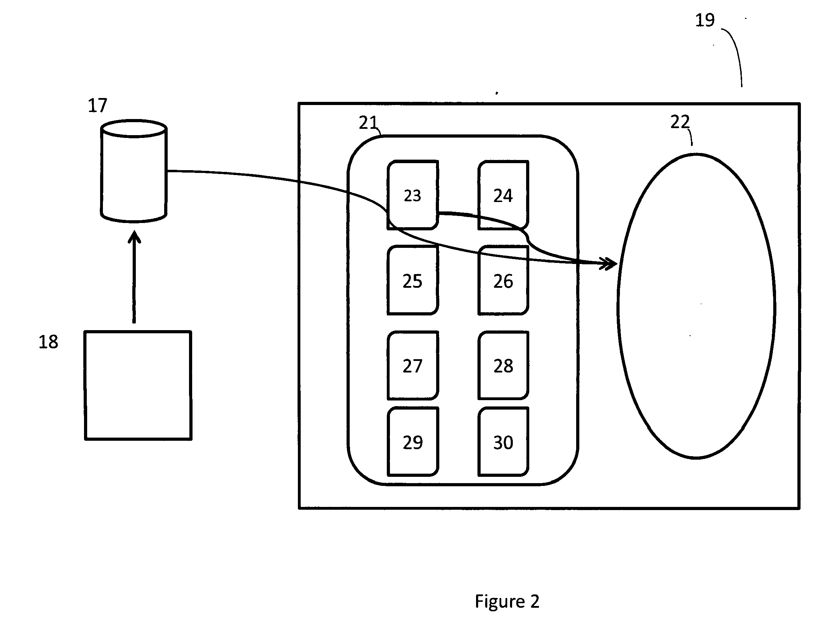

The fraud analysis server 19 of the preferred embodiment will now be described in relation to figure 2. The fraud analysis server comprises a suite of software programs, or modules, stored on a persistent storage device 21 and a processor 22 for executing the executable programme code of the different modules. The modules are a general process module 30 comprising programme code for initiating the different steps of the method, which different steps are performed by the following modules: an approximate string analysis module 23 for comparing transcriptions in order to detect similar phrases in the transcriptions; a grouping module 24 for grouping similar transcriptions and hence calls; a voiceprint generation module 25 for generating voiceprints from each audio file in a group; a voice matching module 26 for matching a voiceprint against speech segments; a calibration module 27 for calibrating the voice matching module; a caller identity comparison module 28 that compares the claimed identities for grouped calls; and a notification module 29 for notifying a contact centre agent about fraudulent calls and discovered fraudulent callers.

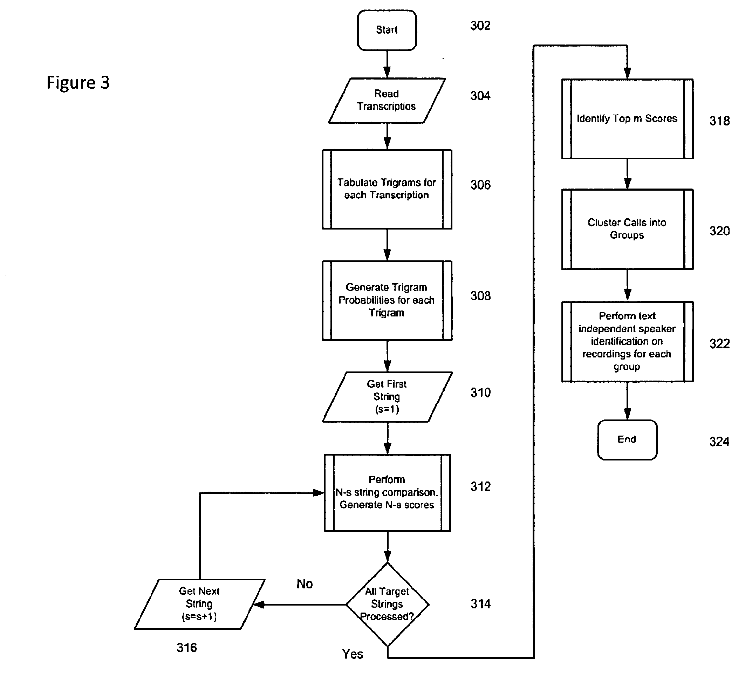

Referring to figure 3, the batch of transcripts to be analysed are uploaded from the central data store 17 by the processor 22, which executes the general process module 30, and stored in a temporary memory. The processor next initiates the string analysis module 23. The string analysis module 23 reads the stored transcripts [304]; tabulates trigrams, which is a sequence of three words in a word string, used in each transcription [306]; generates trigram probabilities for each trigram [3081; and then selects the first target string [310]. In this embodiment the string would be the transcription of the entire caller's portion of the call, and would hence also comprise a claimed identity of the caller. The string analysis module is configured to use an approximate string matching algorithm. The purpose of this approximate string matching algorithm is twofold:
1) It gives a measure of the similarity between two strings
2) It biases the similarity such that uncommon strings receive a higher weighting

The algorithm is therefore effectively looking for specific strings that an imposter caller may have spoken on multiple calls, such that the language is specific to that caller.

The algorithm uses word trigrams. A trigram is a sequence of three words in a word string. As an example the string "I would like my balance please", consists of the following trigrams: "I would like", "would like my", "like my balance", "my balance please". For each call, a list of the trigrams spoken during each call is generated:

| | Trigram 1 | Trigram 2 | Trigram 3 | Trigram 4 | Trigram 5 | Trigram m |
|---|---|---|---|---|---|---|
| Call 1 | 0 | 1 | 1 | 0 | 1 | 0 |
| Call 2 | 0 | 1 | 0 | 0 | 1 | 0 |
| Call 3 | 1 | 1 | 0 | 0 | 1 | 0 |
| Call 4 | 1 | 1 | 0 | 0 | 0 | 1 |
| Call 5 | 1 | 0 | 1 | 0 | 0 | 0 |
| Call 6 | 1 | 1 | 0 | 1 | 1 | 1 |
| Call 7 | 1 | 0 | 0 | 0 | 0 | 0 |
| Call 8 | 1 | 0 | 0 | 0 | 1 | 0 |
| Call 9 | 1 | 1 | 0 | 1 | 1 | 0 |
| Call 10 | 0 | 1 | 0 | 0 | 1 | 1 |
| Call 11 | 0 | 0 | 1 | 0 | 1 | 0 |
| Call 12 | 0 | 1 | 1 | 1 | 1 | 0 |
| | | | 6 | | | |
| Call 13 | 0 | 0 | 0 | 1 | 1 | 1 |
| Call 14 | 1 | 1 | 0 | 1 | 0 | 1 |
| Call N | 0 | 0 | 0 | 1 | 0 | 0 |
| Trigram Probability | 0.53 | 0.60 | 0.27 | 0.40 | 0.66 | 0.33 |

For this algorithm it is only registered that a trigram has been used; it does not count the number of times it has been used, hence there is only 1 or 0 in each row. From this, the probability of each trigram being spoken during a call is calculated. This is calculated by summing each column and dividing by the number of calls N, [308]. In this embodiment N = 15. This probability is then used to provide an inverse weighting on the string similarity scores. From the table above, it can be seen that trigrams 2 and 5 occur in calls 1 and 2. The weighted similarity score between calls 1 and 2 is therefore given by (1/0.6) + (1/0.66) = 3.18.

However, comparing calls 1 and 11, there are two trigrams that occur in both calls. These are trigrams 3 and 5. The weighted similarity score is therefore given by (1/0.27) + (1/0.66) = 5.21. Thus although in both cases only two trigrams occur in each pair of calls, namely trigrams [2 and 5] and trigrams [3 and 5], the weighted similarity score is higher for the comparison between calls 1 and 11. In this case, this increase in score is due to the fact that trigram 3 in the second pair of calls is less common than trigram 2 in the first pair of calls. This implies that the similarity in language used in calls 1 and 11 is more likely to be due to a single individual speaking on both calls. Clearly common phrases used by most callers will receive a low weighting and therefore will not stand out as significant. There will be a total of (N²- N)/2 string matches. Call 1 will be compared against call 2 to call N, producing match scores s12 to s1n. Similarly, call 2 will be compared against call 3 to call N, producing match scores s23 to s2n. Call 2 does not have to be matched against call 1 because call 1 was already matched against call 2 in the previous step. Hence, there will be a total of (N² - N)/2 matches as shown below

| | Call 1 | Call 2 | Call 3 | Call 4 | Call 5 | Call 6 | Call N |
|---|---|---|---|---|---|---|---|
| Call 1 | | s12 | s13 | s14 | s15 | s16 | s1n |
| Call 2 | | | s23 | s24 | s25 | s26 | s2n |
| Call 3 | | | | s34 | s35 | s36 | s3n |
| Call 4 | | | | | s45 | s46 | s4n |
| Call 5 | | | | | | s56 | s5n |
| Call 6 | | | | | | | s6n |
| Call N | | | | | | | |

For each of the string comparisons, a score is obtained which reflects the extent to which each of the strings pairs are similar, [312]. The comparison scores are then ranked from the highest weighted similarity score to the lowest weighted similarity score. The top m matches which are defined by the scores that are above a threshold T are selected,[318], these are underlined on the table above and the corresponding string pairs or calls are grouped [320] by the grouping module 24.

A group is generated by taking all the underlined calls in a given column and row. E.g. looking to see which calls are similar to call 4, a group would be identified by scores s24, s34 and s46. This would form a group consisting of calls 2, 3, 4 and 6. Similarly, looking at call 2 would generate a group consisting of calls 3, 4 and 5; looking at call 3 would generate a group consisting of calls 2, 3; looking at call 5 would generate a group consisting of calls 2 and 5; and looking at call 6 would generate a group consisting of calls 4 and 6.

Next voice analysis of the identified calls in each group is performed, where text independent speaker identification on recordings for each group is made, [322].

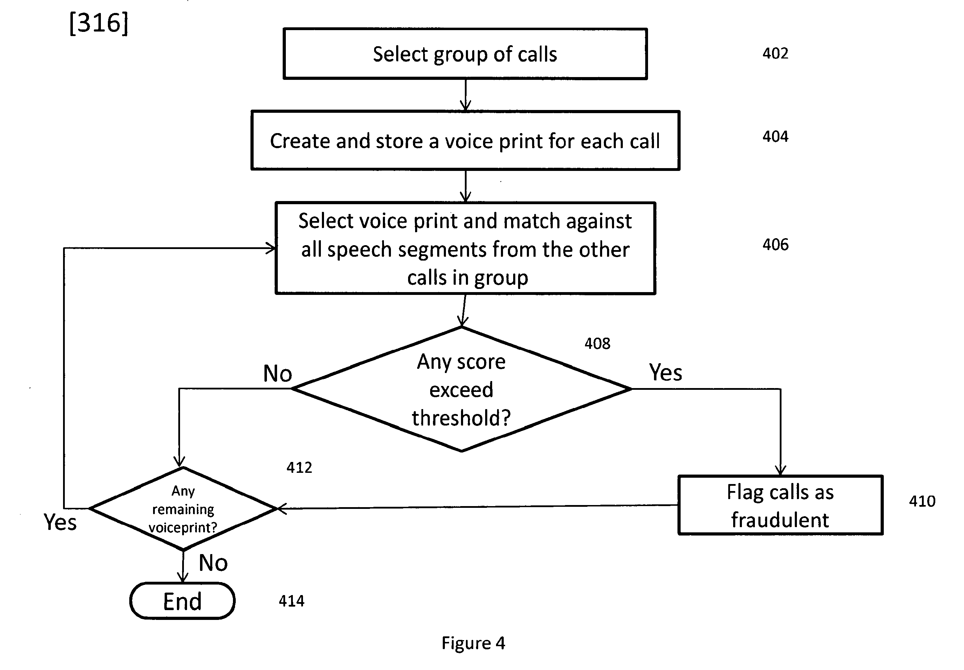

The process of step [322] is described in more detail in the flow chart shown in figure 4.

First a group of P calls identified by the transcript comparison algorithm (figure 3) is selected for analysis [402] and then the voiceprint generation module 25 creates and temporarily stores a voiceprint for each call in the group, [404].

Almost all of the caller's speech from each call is used for generating the voiceprint and the only speech that is not used is a portion of the speech that is subsequently used by the calibration module 27 to calibrate the voice analysis system. Preferably between 80 - 95% of the speech is used for the voiceprint and the rest is used for the calibration but other proportions can be selected.

Next a first voiceprint is selected and matched against all voice recordings from the other P-1 calls in the group in order to generate a set of likelihood scores for how similar the voice is to each of the other voices in the group [406].

Then each score is compared to a threshold and if the score exceeds the threshold the call from which the voiceprint was generated and the call it was compared against are determined to be generated by the same caller [408] and the calls and the caller, which most likely is unknown, are flagged as fraudulent [410].

If none of the scores exceed the threshold it is checked if there are any remaining voiceprints in the group that have not been matched against the other voice recordings [412]. If there are any remaining voiceprints the matching process is repeated otherwise the process ends [414].

Next the caller identity comparison module 28 compares the claimed identities of the callers in the group. If the claimed identities are different and the voices match the notification module 29 notifies a contact centre agent or an automatic alarm system that the calls in the group are probably made by the same caller although this caller has used different identities for asking about different or the same accounts.

A suitable decision threshold for the voice analysis is estimated in a calibration step by examining the spread of scores obtained by matching segments of speech against the voiceprint for caller 1. When a speech segment from caller 1 is matched against the voiceprint for caller 1, this produces a score S1. The larger the score, the more likely it is that the speech segment matches the voice that was used to make the voiceprint. It would therefore be expected that the score for S1, which is from the same caller, would be the largest. As explained earlier the speech segment which is matched against the voiceprint is not actually contained in the voiceprint, but is the portion used for calibration, so this gives a realistic estimation of the score that would be expected for the case when the caller's speech does in fact match the voiceprint.

For a total of P audio samples identified, scores S2 - SP are also calculated by comparing speech segments from the audio samples against the voiceprint from caller 1. If the callers corresponding to these scores are not the same person who made call 1, then the scores would be expected to be smaller than S1.

The (P-1) scores S2 - SP are ranked in descending value. If the highest score is closer to S1 than it is to the next lower score, then this is a strong indication that the speech used to generate the score S2 came from the same caller as that used to produce S1 and could therefore correspond to a fraudulent caller. The exact ratio scores is a system parameter and can be adjusted as required.

If there is three calls that all have the same speaker, the calls generating scores S1, S2 and S3, score s2 could be closer to s3 than to S1 which would indicate that it may not be the same speaker. If so, the best way is to run a calibration trial and gather statistics on typical calls. In the absence of a calibration trial, one possible decision scheme is to take the average of all the scores to get Sₐᵥₑ. Then S2 matches S1 if (S2/S1) > (Sₐᵥₑ/S2), otherwise S2 is closer to the average of the group.

Once it is established by the fraud analysis server that certain calls related to different accounts in a group are generated by the same unidentified caller these calls are flagged or highlighted in a suitable manner and brought to the attention of a contact centre agent at the contact centre. The transactions initiated by the fraudulent caller can then be stopped, especially if the analysis is performed the same day as the transaction was initiated, and measures for protecting the legitimate account holders, such as changing the account details, activated.

Preferably, to prevent the fraudulent caller from initiating further fraudulent activities a voiceprint is generated from the speech of the caller (if not already generated) and stored in a fraudulent caller database at the contact centre. Thus, the next time he/she calls the contact centre a speech recognition server will compare speech segments from the call to voiceprints in the fraudulent caller database; the caller identified as a fraudulent caller and consequently prevented from retrieving information or initiating any transactions.

It will be seen that the above embodiments have the advantage of detecting from a huge batch of calls previously unknown suspicious callers, who may be fraudsters, but whose voices are not already captured on a suspect voiceprint database. The proposed method and system actively searches for potential fraudsters and uses characteristics of the fraudster's call pattern, indicative of a rehearsed dialog, to help make a short list of potential fraud candidates.

By transforming the speech of the calls to strings of phonemes or text it is possible to compare a very large number of calls in order to find similar call patterns that indicate that certain calls are made by the same person, and hence avoiding the complexity and unreliability of speaker recognition that is unavoidably introduced when speaker recognition is performed on a very large number of calls.

It would be apparent to one skilled in the art that the invention can be embodied in various ways and implemented in many variations. In the optional voice recognition step errors, or other characteristics, introduced by different handsets can be used for identifying that calls related to different accounts are made from the same handset. Since a fraudulent caller probably uses the same handset for all calls the characteristics of handsets can be used as an alternative to or in addition to comparing only voice characteristics.

Whilst in the preferred embodiment the software modules are stored in a persistent memory of the fraud analysis server 19 , the modules could alternatively be stored in a portable memory 20, such as DVD-rom or USB stick, which when inserted in and executed by a general purpose computer performs the preferred embodiments for detecting fraudulent callers.

The string matching algorithm in the described embodiments uses word trigrams; however the algorithm could also use bigrams, word pairs, or any number of words as well as strings of phonemes. Phonemes are the basic unit of speech of a language and a spoken word therefore comprises one or more phonemes. The speech transcription solution could therefore transform the speech of the calls to text comprising words or strings of phonemes that constitute parts of these words.

Other approximate string matching algorithms than the preferred algorithm described above can be used. Reference is for example made to the Levenshtein algorithm which calculates the least number of edit operations that are necessary to modify one string to obtain the other string. This algorithm can be applied to words, not letters, or can be applied to phoneme symbols. Another possible algorithm to use would be Dynamic time warping.

In summary, fraudulent callers that masquerade as legitimate callers in order to discover details of bank accounts or other accounts are an increasing problem. In order to identify and prevent possible fraudsters from obtaining such details a method and system is proposed that transform the speech of a batch of incoming calls to strings of phonemes or text, whereafter similar caller patterns, such as similar phrases or wording, in the calls are determined and the calls having the similar caller patterns, and preferably also similar acoustic properties, are grouped together and identified as being from the same fraudulent caller. Transactions initiated by the fraudulent caller can as a result be stopped and preferably a voiceprint of the fraudulent caller's speech is generated and stored in a database for further use.

## Claims

1. A method for automatically identifying suspicious calls to an organisation comprising
transforming at least a caller portion of the speech of the calls in order to obtain transcript of the calls,
associating a claimed identity of the caller with each call,
comparing the transcripts of the calls in order to identify one or more groups of calls in which the caller uses similar characteristic wording,
comparing the voice in each call in each identified group to the voices in the other calls in the identified group,
comparing claimed caller identities of the calls in each identified group, and if the associated claimed caller identities are different and the voices match, identifying the calls in the identified group as being suspicious as they are likely to have been made by the same caller claiming different identities.

2. A method according to claim 1 further comprising generating a voiceprint for each of the calls in each identified group and matching each voiceprint to speech segments of the other calls in the identified group.

3. A method according to claim 1 or 2 wherein the voice comparison generates a voice match likelihood score and where the call is deemed to be initiated by the same caller as the caller who generated the voiceprint if the voice match likelihood score exceeds a threshold.

4. A method according to claim 2 wherein the voiceprint is generated from a major portion of the caller's speech from a call and the remaining portion of the caller's speech is used for calibration of said threshold.

5. A method according to claim 4 wherein 80 to 95 % of the caller's speech is used for the voiceprint.

6. A method according to any of the preceding claims wherein the transcripts are compared using an approximate string matching algorithm.

7. A method according to claim 6 wherein the approximate string matching algorithm produces string similarity scores which are weighted by the infrequency of usage of wording during a call.

8. A method according to any of the preceding claims wherein the transcript comprises a string of phonemes.

9. A system for identifying suspicious calls to an organisation comprising
a speech transcription server for transforming at least a caller portion of the speech to transcripts of the calls,
a call data store that associates a claimed identity of a caller with each call,
a grouping module for processing said transcripts to identify groups of calls having similar characteristic wording,
a voice comparison module that compares the voice of each caller in each identified group to the voices of the other callers in the identified group,
a caller identity comparison module for comparing claimed caller identities in each identified group, and
a notification module that notifies a user of each group of calls identified as being suspicious if the associated claimed caller identities are different and the voices match.

10. A system according to claim 9 further comprising a voiceprint generation module
for generating a voiceprint from each call in each identified group.

11. A system according to claim 10 further comprising a calibration module for calibrating a threshold used by the voiceprint matching module.

12. A system according to any of claims 9 to 11 wherein the transcript comparison module is arranged to compare the transcripts using an approximate string matching algorithm.

13. A computer program or suite of computer programs executable by a computer system to cause the computer system to perform the method of any one of claims 1 to 8.

14. A non-transitory computer readable storage medium storing a computer program or a suite of computer programs according to claim 13.
